# FASCICULE DE BREVET EUROPEEN

(11) **EP 0 910 769 B1**
(45) Date de publication et mention de la délivrance du brevet: **02.07.2003**
(21) Numéro de dépôt: 98921581.9
(22) Date de dépôt: 23.04.1998
(51) Int. Cl.: F16L 55/04, F16D 48/02

(54) **AMORTISSEUR DE VIBRATIONS D'UNE PEDALE DE DEBRAYAGE POUR VEHICULE AUTOMOBILE**
SCHWINGUNGSDAMPFER FÜR KRAFTFAHRZEUGKUPPLUNGSAUSRÜCKPEDAL
MOTOR VEHICLE CLUTCH PEDAL VIBRATION ABSORBER

(30) Priorité: 23.04.1997 FR 9705245
(43) Date de publication de la demande: 28.04.1999
(73) Titulaire: VALEO EMBRAYAGES s.a.s., 80009 Amiens Cedex 1 (FR)
(72) Inventeur: REY, Frédéric, F-95210 Saint-Gratien (FR); MOSSO, Giovanni, I-10026 Santena (IT); FEDERICI, Luca, I-10093 Collegno (IT)
(74) Mandataire: Gamonal, Didier
(86) Numéro de dépôt international: FR9800807
(87) Numéro de publication internationale: WO98048212

(56) Documents cités:
- DE-C- 19 540 753
- FR-A- 2 442 156
- FR-A- 2 655 128
- GB-A- 1 562 709
- US-A- 5 070 983

## Description

La présente invention concerne les commandes hydrauliques d'embrayages de véhicules automobiles et se rapporte plus particulièrement aux amortisseurs de vibrations hydrauliques, que comportent ces commandes.

Une telle commande est décrite dans le document FR-A-2 442 156.

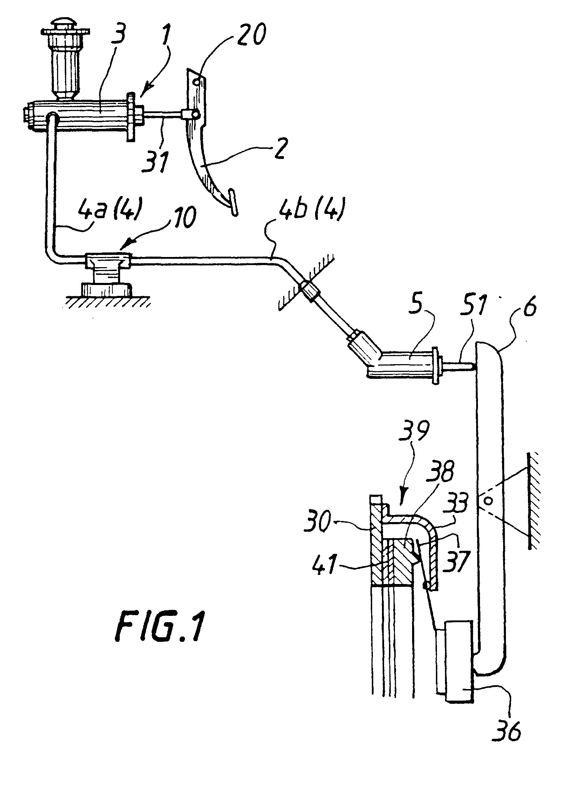

Dans cette demande la commande 1 (figure 1) présente une pédale de débrayage 2, un émetteur hydraulique 3 formant maître-cylindre et un récepteur 5.

L'émetteur 3 comporte, de manière connue, un cylindre fixe à l'intérieur duquel se déplace axialement un piston relié par une tige 31 à la pédale de débrayage 2.

Ici la pédale est à sa partie supérieure montée à articulation en 20 sur une partie fixe du véhicule.

Une conduite hydraulique 4 relie le maître-cylindre 3 au récepteur 5 formant vérin d'actionnement de l'embrayage 29 du véhicule automobile comprenant un diaphragme 37, un couvercle 33, un plateau de pression 38, un disque 41 et un plateau de réaction 30. Le fluide de commande transite par cette conduite. Ce récepteur 5 est à l'image de l'émetteur et comporte un cylindre fixe à l'intérieur duquel se déplace axialement un piston relié ici par une tige 51 à une fourchette de débrayage 6 agissant de manière connue sur une butée de débrayage 36 de l'embrayage 29 en contact avec un diaphragme 37 en appui sur un couvercle 33 pour agir sur un plateau de pression 38 afin de serrer les garnitures de friction d'un disque de friction 41 entre le plateau de pression 38 et le plateau de réaction 30 de l'embrayage 29, formant volant d'entraînement.

Le couvercle se fixe sur le plateau de réaction calé en rotation sur le vilebrequin du moteur du véhicule, tandis que le disque de friction est calé en rotation sur l'arbre d'entrée de la boîte de vitesses.

Le récepteur 5 agit donc directement ou indirectement sur la butée de débrayage de l'embrayage 29 pour manoeuvrer ledit embrayage entraîné par le moteur du véhicule.

Pour plus de précisions on se reportera au document FR-A-2 730 532.

Dans ce document on voit que le récepteur peut comporter un piston agissant directement sur la butée de débrayage, le récepteur étant du type concentrique en étant traversé par l'arbre d'entrée de la boîte de vitesses.

Dans tous les cas le piston et le cylindre définissent une chambre à volume variable.

Lors de l'opération de débrayage, l'émetteur est pressurisé à l'aide de la pédale 2 alors enfoncée par le conducteur et le volume de la chambre de commande de l'émetteur 3 diminue, tandis que le volume de la chambre de commande du récepteur 5 augmente. Lors de l'opération de réembrayage c'est l'inverse, le volume de la chambre de commande du récepteur diminue, tandis que le volume de la chambre de commande de l'émetteur augmente, ladite chambre étant alors dépressurisée.

Il y a donc transfert du fluide de commande d'une chambre à l'autre.

Lors de l'opération de débrayage, le conducteur appuie sur la pédale de débrayage, en sorte que les vibrations du moteur sont transmises à ladite pédale via la butée de débrayage 36, le récepteur 5, la canalisation 4, l'émetteur 3.

Ces vibrations sont néfastes pour le confort du conducteur et fonction de la vitesse de rotation du moteur. Elles sont importantes, notamment dans le cas de véhicules équipés de moteurs diesel. Ceci est amplifié par les imperfections géométriques du diaphragme 37, dont les doigts ne sont pas tous dans le même plan du fait que le diaphragme est une pièce de forme tronconique à l'état libre, qui subit des traitements thermiques.

Pour cette raison, on a prévu dans la canalisation 4 un amortisseur hydraulique de vibrations 10. L'amortisseur hydraulique 10 est fixé sur une partie fixe du véhicule et permet d'absorber les fluctuations de pression hydraulique provenant du récepteur 5 et provoquées par les vibrations du moteur du véhicule, afin d'empêcher la propagation desdites fluctuations vers l'émetteur 3 et donc vers la pédale 2.

Pour ce faire la conduite 4 est en deux parties 4a et 4b se branchant respectivement, d'une part, sur l'émetteur 3 et l'amortisseur de vibrations 10 et, d'autre part, sur le récepteur 5 et l'amortisseur de vibrations 10.

L'amortisseur de vibrations 10 comporte un corps creux avec des orifices reliés respectivement aux parties 4a et 4b, par exemple sous forme de tuyau. L'amortisseur 10 comporte également, entre ces deux orifices, une cavité dans laquelle se déplace, selon un mouvement alternatif, un piston pour provoquer la compression et la détente d'un bloc en matière élastique placé à l'extérieur pour ne pas être en contact avec le fluide de commande.

Pour ce faire le piston épaulé porte un joint d'étanchéité et le bloc en matière élastique prend appui à l'extérieur du corps de l'amortisseur hydraulique.

Cette solution fait donc appel à un grand nombre de pièces. En outre elle est encombrante en hauteur (verticalement).

Le document FR-A-2.655.128 décrit un dispositif de filtrage des vibrations pour commande hydraulique d'embrayage de véhicule automobile.

Selon le préambule de la revendication 1, comme connu de ce document, un tel amortisseur de vibrations comprend un émetteur, actionné par la pédale de débrayage et relié par une conduite à un récepteur agissant sur une butée de débrayage d'un embrayage de véhicule automobile, du type qui comporte un corps muni d'une cavité destinée à être raccordée à la commande hydraulique comprenant un fluide d'actionnement, un bloc en matière élastique monté dans un logement du corps et la cavité, formant chambre dudit fluide, étant délimitée par le bloc en matière élastique fermant de manière étanche la cavité et prenant appui sur une butée solidaire dudit corps.

Un tel dispositif ne permet pas de contrôler et d'amortir directement les vibrations.

La présente invention a pour objet de pallier de manière simple et économique ces inconvénients.

Suivant l'invention un amortisseur de vibrations du type sus-indiqué est caractérisé par la seconde partie de la revendication 1.

Grâce à l'invention, on réduit le nombre de pièces puisque le bloc en matière élastique assure une double fonction d'étanchéité et d'absorption des vibrations.

Par rapport au document FR-A-2.442.156, on réduit également l'encombrement en hauteur et on s'affranchit de la présence d'un piston encombrant radialement. L'amortisseur de vibrations est donc compact et économique.

Grâce au premier disque, le bloc est soumis à l'action du fluide de commande et peut donc amortir directement les vibrations. En outre l'amortissement est contrôlé par les trous du premier disque en association avec la raideur du bloc en matière élastique. Le logement épaulé communique avec la cavité.

Ainsi le premier disque peut prendre appui sur l'épaulement et le bloc en matière élastique est en contact intime avec au moins une portion de la périphérie externe du logement, c'est-à-dire avec une portion de la ou les faces latérales du logement, pour assurer l'étanchéité.

Le montage est donc simple et est réalisé par enfilage.

La butée consiste avantageusement en un second disque troué. Le bloc en matière élastique comporte au moins une creusure en regard d'un trou du second disque pour assurer une circulation d'air et contrôler la déformation du bloc. Le bloc peut être en forme de chapeau pour être déformé latéralement (horizontalement).

Le deuxième disque est maintenu en place par une goupille en forme de U dont les branches sont engagées dans des passages ménagés à cet effet dans le corps de l'amortisseur.

En variante on peut utiliser un autre moyen, par exemple une rondelle filetée extérieurement et venant en prise avec un filetage que comporte l'alésage interne du logement.

En variante le second disque est fixé par collage, soudure, sertissage, encliquetage ou par un anneau d'arrêt au corps de l'amortisseur.

D'une manière générale, on peut précontraindre le bloc entre le premier disque et la butée. Dans tous les cas on peut tester par avance l'amortisseur hydraulique formant un ensemble manipulable et transportable.

Cet amortisseur peut être solidaire du récepteur ou de l'émetteur, la conduite étant alors en une partie.

L'amortisseur n'a pas besoin d'être fixé sur une partie fixe. La présence du premier disque n'est pas obligatoire.

D'autres avantages apparaîtront à la lumière de la description qui va suivre en regard des dessins annexés dans lesquels :
- la figure 1 est une vue schématique d'une commande hydraulique de l'art antérieur :
- les figures 2 à 4 sont des vues en coupe axiale d'un amortisseur hydraulique selon l'invention pour différents modes de réalisation ;
- la figure 5 est une vue en section d'un branchement d'alimentation ;
- les figures 6 à 8 sont des vues en coupe axiale d'autres variantes de réalisation.
- la figure 9 est une vue en coupe axiale d'une autre variante ne faisant pas partie de l'invention, mais permettant de mieux la comprendre.

L'amortisseur de vibrations de la pédale de débrayage selon l'invention se monte dans les figures à la place de l'amortisseur de la figure 1. Par simplicité cet amortisseur sera affecté du même signe de référence 10.

L'amortisseur 10 comporte un corps creux 7 en matière moulable, par exemple en matière plastique ou à base d'aluminium.

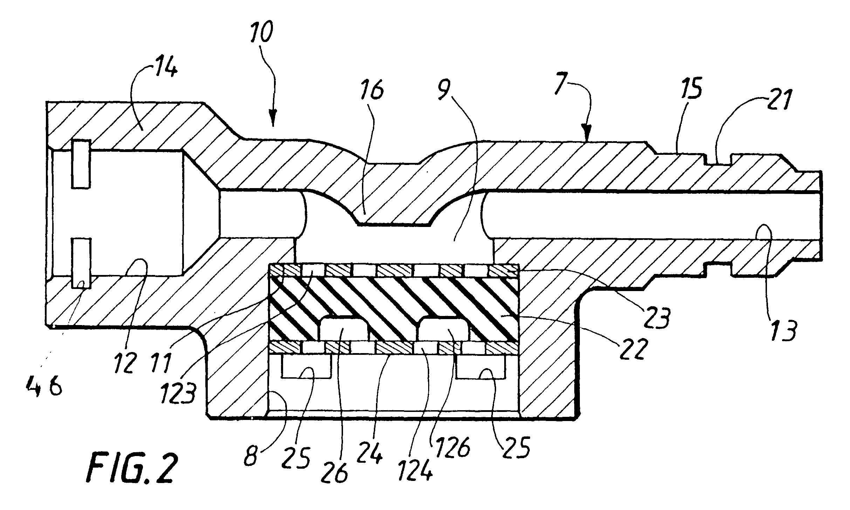

Dans les figures 2 à 4 les flèches V et H représentent respectivement les directions verticale et horizontale.

Dans les figures 2 à 4 le corps 7 présente un logement 8 d'orientation verticale. Ce logement débouche dans une cavité 9 reliée à des orifices 12,13 pour passage du fluide de commande.

Un épaulement 11 délimite le logement 8 de la cavité 9.

Ainsi verticalement le corps 7 est étagé, la cavité 9 prolongeant verticalement le logement 8 et ayant horizontalement une taille inférieure pour délimitation de l'épaulement 11.

Le corps 7 présente un premier orifice 12 et un second orifice 13 pour liaison respectivement avec la partie 4a et la partie 4b de la canalisation ou conduite 4 de la figure 1.

Les orifices 12,13 sont disposés de part et d'autre de la cavité 9, formant chambre de fluide, et forment les canaux intérieurs de raccords obtenus par moulage. A la figure 2 l'orifice 12 appartient à un raccord 14 du type femelle et l'orifice 13 à un raccord 15 du type mâle. Les orifices 12,13 sont d'orientation horizontale.

La cavité 9 présente centralement une protubérance 16 à côtés latéraux symétriques profilés pour formation d'une chicane dans la circulation du fluide de commande entre les orifices 13,12. Les côtés latéraux sont ici en forme d'arc de cercle. Le corps 7 est globalement en forme de T.

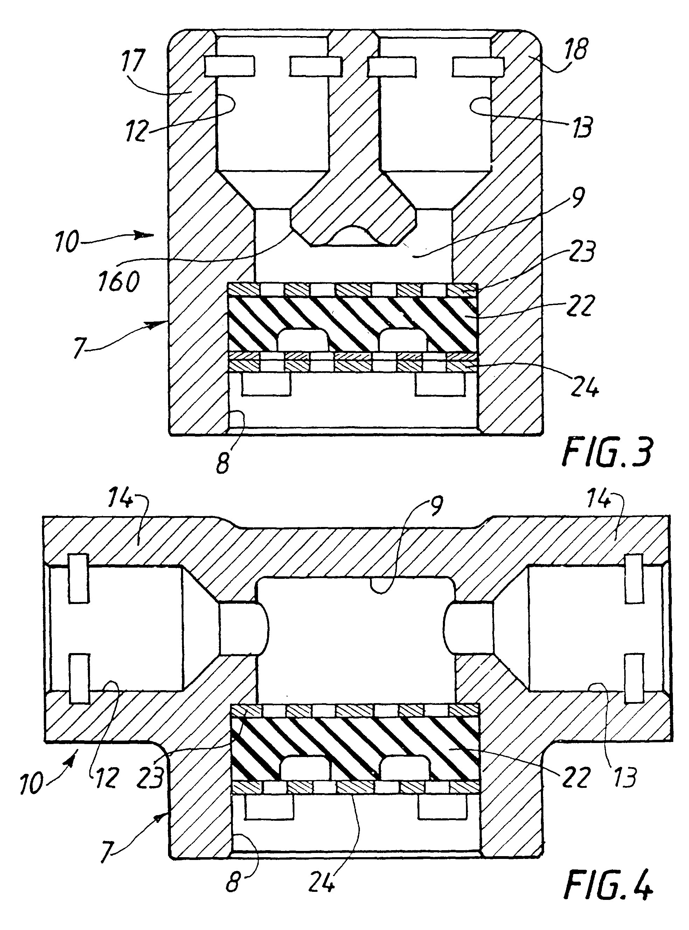

A la figure 3 les orifices 12 et 13 appartiennent à des raccords 17,18 du type femelle. La circulation du fluide de commande dans le corps 7 est en forme de U.

Plus précisément les raccords 17,18 sont d'orientation verticale et sont implantés verticalement au-dessus de l'ensemble logement 8 - cavité 9. La cavité 9 présente centralement une protubérance 160 pour formation d'une chicane.

Les côtés latéraux de la protubérance 160 sont chanfreinés.

A la figure 4 les orifices 12 et 13 appartiennent chacun à un raccord du type femelle 14 et la cavité 9 est dépourvue de chicane.

Comme à la figure 2 le corps 7 est en forme de T, les raccords 14 étant d'orientation horizontale, ainsi que la circulation du fluide de commande.

Bien entendu en variante le corps 7 peut être doté de deux raccords du type mâle. Toutes les combinaisons sont possibles.

Bien entendu les parties 4a et 4b présentent des raccords complémentaires à ceux des orifices 12 et 13.

Par exemple la partie 4a présente à son extrémité un raccord du type mâle pour pénétrer à l'intérieur du raccord 14 de la figure 2.

Ici à chaque raccord du type femelle 14,17,18 sont associés deux passages portant les références 46 à la figure 2. Le raccord mâle 15 présente extérieurement une gorge 21.

Ces dispositions sont dues au fait que les branchements d'alimentation intervenant entre l'amortisseur de vibrations 10 et les parties 4a, 4b de la canalisation 4 sont du type brochable, comme décrit par exemple dans le document FR-A-2 736 136.

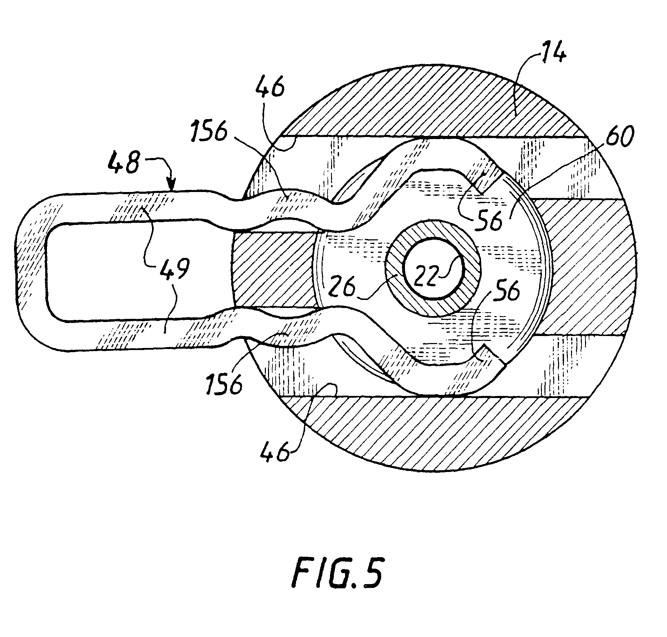

Ainsi par exemple, comme visible à la figure 5, le raccord mâle 26 à canal interne 22 de la partie 4a est maintenu en position engagée axialement à l'intérieur du raccord femelle 14 par une goupille, ou broche, transversale 48 en forme de U dont les deux branches parallèles 49 sont engagées chacune dans un logement 46 transversal du raccord 14. Les deux branches 49 coopèrent avec une gorge annulaire externe du raccord 26.

Dans cette figure 5 la goupille transversale 48 occupe une position intermédiaire et coopère avec un collet radial 60 du raccord 26 par ses portions extrêmes élargies 56. La présence de ses portions extrêmes 56 n'est pas obligatoire, celles-ci pouvant être supprimées.

En position enfoncée de verrouillage les creux des portions bombées intermédiaires 156 de la goupille coopèrent à serrage avec le raccord 26, plus précisément avec le fond de la gorge dudit raccord 26.

Bien entendu le raccord 14 peut être doté d'un orifice de purge et le raccord 26 de deux gorges comme décrit dans le document FR-A-2 736 136 précité.

Bien entendu en variante les branchements d'alimentation peuvent être du type vissé à anneau d'arrêt ou autres.

Suivant une caractéristique de l'invention, un bloc 22 en matière élastique est monté à étanchéité dans le logement 8 du corps 7.

Ici le logement 8 est de forme cylindrique. La section de ce logement peut être de forme rectangulaire, le bloc 22 ayant alors en section une forme rectangulaire complémentaire. Le bloc 22 est en contact intime avec la périphérie externe du logement 8 en dessous du disque 23.

Par simplicité le logement 8 est ici de section circulaire et il en est de même du bloc 22. Ce bloc 22 est ici en caoutchouc naturel ou en caoutchouc synthétique obtenu par polymérisation.

D'une manière générale le bloc 22 est en élastomère, cette définition englobant ici le caoutchouc naturel. La matière du bloc 22 est choisie pour être compatible avec celle du fluide de commande, ici de l'huile.

Dans les figures 2 à 4 le bloc 22 est maintenu sous précontrainte entre un premier disque 23 et une butée arrière en forme de deuxième disque 24. Le premier disque 23 est interposé entre la cavité 9 et le bloc 22 en étant en contact avec l'épaulement 11, tandis que le deuxième disque est maintenu en place dans le logement 8 par une goupille en forme de U.

Les disques 23,24 sont percés pour ici formation de trous. Le premier disque 23, adjacent à la cavité 9, présente des trous d'accès 123 au bloc élastique 22. Le nombre de trous 123 et leur taille dépend des applications. Ces trous 123 peuvent être, si nécessaire, calibrés.

Ainsi l'amortissement des vibrations est contrôlé par les trous 123 en association avec la raideur du bloc 22. Grâce aux trous 123, on contrôle bien la déformation du bloc 22.

Cette déformation est favorisée par le fait que le bloc 22 présente au moins une creusure 126.

Dans les figures 2 à 4 plusieurs creusures 126 sont prévues.

On notera que c'est par simplicité qu'on a fait figurer ici les références 123,126 ainsi que les références 124,25 (décrites ci-après) uniquement à la figure 2.

Les creusures 126 sont en relation avec des trous 124 du deuxième disque 24 pour assurer une circulation d'air. Ces creusures 126 sont ouvertes en direction du disque 24 et des trous de celui-ci.

En fonctionnement le bloc 22 est comprimé et se détend pour absorber les vibrations. Ceci est favorisé par les creusures 126 et les trous 124, qui permettent à l'air de s'échapper.

On appréciera que la chicane, formée à la faveur de la protubérance 16,160, crée un obstacle dans le passage du fluide de la commande hydraulique d'embrayage, tel que de l'huile, en dirigeant celui-ci vers le bloc 22, ce qui est favorable pour l'amortissement.

Cette chicane 16,160 limite donc le passage du fluide, ainsi que la propagation des ondes. Les vibrations sont ainsi atténuées.

On appréciera que le corps 22 assure l'étanchéité du corps 7 et a donc une double fonction.

Cela est favorisé par le second disque 24 qui donne une précharge au bloc 22, qui ainsi flue et vient en contact intime avec l'alésage du logement 8. Ceci permet d'assurer une bonne étanchéité.

Dans les figures 2 à 4 le bloc 22 est comprimé radialement.

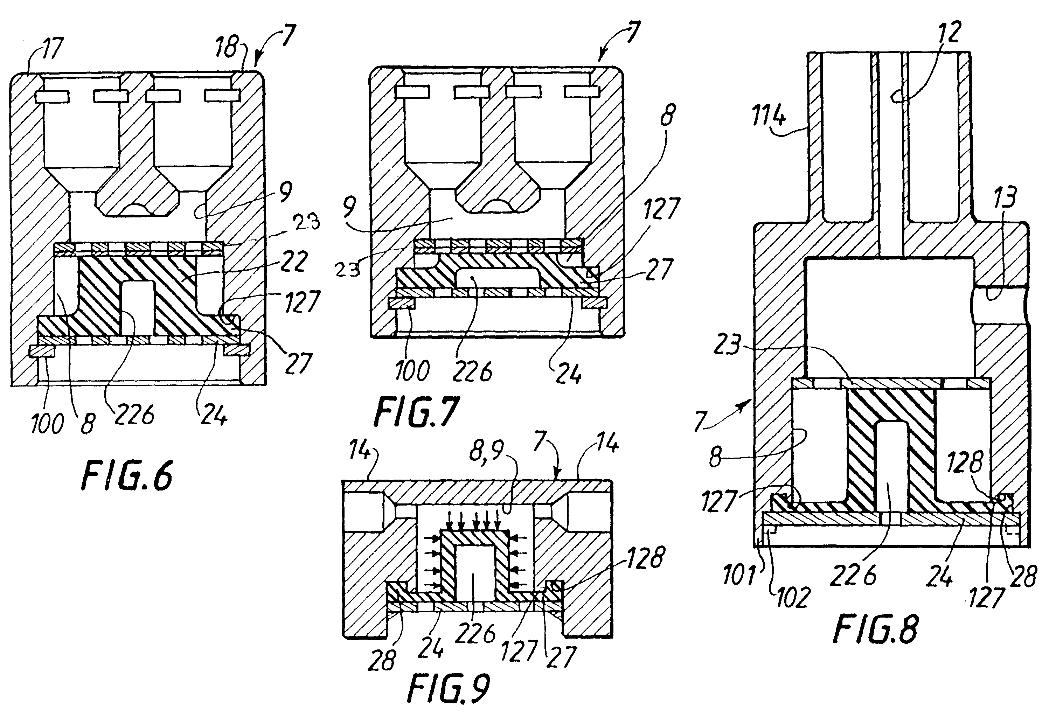

En variante (figures 6 à 8 dans lesquelles les éléments communs aux figures 2 à 4 portent les mêmes références) le bloc en matière élastique 22, ici de l'élastomère, est comprimé verticalement et/ou horizontalement.

Dans ces figures le bloc 22 est monté au moins en partie à jeu dans son logement 8. Un jeu existe latéralement entre le contour du logement et le bloc 22. Le bloc 22 est globalement en forme de chapeau.

La creusure centrale 226 du chapeau débouche sur le deuxième disque 24. Ce disque 24 est troué pour établir une communication entre l'extérieur et la creusure.

Par simplicité on n'a pas référencé les trous dans ces figures. Le disque 24 est fixé au corps 7 à l'aide d'un anneau d'arrêt 100 dans les figures 6 et 7.

Dans les figures 2 à 4 cela est réalisé à l'aide d'une goupille (non visible) du type de celle de la figure 5. C'est la raison pour laquelle il est prévu des dégagements 25 dans le corps 7, ces dégagements 25 étant analogues aux dégagements 46 de la figure 5.

Grâce à la goupille on comprime le bloc 22 entre les disques 23,24 dans les figures 2 à 4.

Dans les figures 6 et 7 l'anneau 100 permet de comprimer le bord 27, ici annulaire, du chapeau 22 entre la butée arrière 24 et un épaulement 127 du logement 8. Le bloc 22 est donc en contact intime avec une portion de la périphérie externe du logement.

Cet épaulement 127 est formé à la faveur d'un changement de diamètre interne du logement 8. Une bonne étanchéité est ainsi assurée.

La butée 24, en forme de disque dans les figures 6 à 9, peut être métallique ou en matière plastique. Il en est de même du premier disque 23.

On notera que dans les figures 6 et 7 le premier disque 23 consiste en une paire de disques dont les trous en regard peuvent avoir, si désiré, des tailles différentes.

A la figure 8 la fixation de la butée arrière est réalisée par sertissage. Dans ce cas le corps 7 est métallique et on voit en 101 la matière du corps 7 destinée à fluer lors de l'opération de sertissage.

Après cette matière forme un épaulement visible en pointillés sous la référence 102.

A la figure 9 représentant une variante non comprise dans l'invention la fixation de la butée arrière 24 est réalisée par soudage, le corps 7 étant métallique.

Dans les figures 2 à 4, 6 et 7, on peut démonter la butée 24.

Dans les figures 6 et 7 le bloc est déformé verticalement et horizontalement. On contrôle ces déformations en jouant sur la hauteur et le diamètre de la partie centrale du chapeau 22 ainsi que sur la taille de la creusure 226.

On peut obtenir une déformation spécifique du bloc.

Ainsi à la figure 6 la partie centrale du bloc 22 est plus haute que celle de la figure 7 et est donc plus déformable horizontalement.

A la figure 8 on a privilégié les déformations horizontales, le premier disque 23 étant dépourvu d'ouvertures en regard de l'extrémité sommitale du bloc 22 au contact du disque 23.

C'est latéralement que sont placés les trous, la partie centrale du bloc 22 est dans ce cas de grande hauteur.

Dans les figures 6 à 8 le bloc est monté sous précontrainte entre la butée 24 et le ou les disques 23.

L'étanchéité est assurée par le rebord 27 du bloc 22 dont la partie centrale saillante verticalement est montée centralement à jeu dans le logement.

En variante non comprise dans l'invention (figure 9) le bloc n'est pas monté sous précontrainte, le premier disque étant supprimé. Pour réaliser l'étanchéité le rebord 27 présente un bourrelet 28 à sa périphérie externe. Le bourrelet 28 est d'orientation verticale et pénètre dans une gorge 128 ménagée dans le corps 7. La gorge 128 maintient latéralement le bloc 22 et est ménagée dans l'épaulement 127 du logement 8.

A la figure 9 on a représenté par des flèches la pression exercée par le fluide de commande.

On notera qu'à la figure 8 il est également prévu, comme à la figure 9, un bourrelet 28 d'orientation verticale pénétrant dans une gorge 128 ménagée dans l'épaulement 127 du logement. Une bonne étanchéité est obtenue en toute circonstance malgré les déformations horizontales du bloc.

Ainsi qu'on l'aura compris les perçages des disques 23,24 permettent un amortissement contrôlé associé à la raideur du bloc 22.

Le second disque 24, formant butée, peut être fixé par soudure, par sertissage ou collage ou à l'aide d'un circlips sur le corps 7.

En variante le disque est fixé par clipsage.

Bien entendu, au lieu d'un second disque, on peut utiliser une butée d'une autre forme. Par exemple la butée 24 peut consister en un couvercle fermant l'extrémité arrière du logement 8 et rapportée par encliquetage sur le corps 7.

On appréciera qu'à la figure 8 les orifices 12,13 sont à 90°.

Ainsi la partie 4b de la figure 1 peut être rigide et fixée par brasage au niveau de l'orifice 13 sur le corps 7, tandis que la partie 4a de la figure 1 peut être souple et engagée sur le connecteur mâle 114 que présente en saillie verticale le corps 7.

L'orifice 12 forme le canal central du connecteur 114 et débouche dans la cavité 9.

Ainsi l'amortisseur de vibrations constitue un raccord entre les deux parties de la conduite.

Bien entendu en variante le corps 7 (et donc l'amortisseur 10) peut être solidaire de l'émetteur ou du récepteur de la commande hydraulique en sorte que l'amortisseur de vibrations ne se branche pas forcément entre deux parties d'une conduite.

L'amortisseur 10 peut être d'un seul tenant avec le récepteur ou l'émetteur en étant venu de moulage avec ceux-ci.

Bien entendu la butée arrière 24 n'est pas forcément trouée.

Dans ce cas il se forme un accumulateur à gaz au niveau de la ou des creusures du bloc élastique.

Ceci permet d'avoir une courbe de déformation différente du bloc 22.

On appréciera que les trous de l'un des éléments butée arrière - premier disque facilitent la mise sous précontrainte du bloc 22, qui peut ainsi fluer pour pénétrer dans les trous.

On appréciera par exemple dans le mode de réalisation de la figure 8 que la précontrainte du bloc 22, ici en élastomère, est appliquée verticalement pour une utilisation horizontale du bloc 22 sous l'action des variations de pression de façon à assurer une courbe de déformation spécifique.

On notera qu'à la figure 9 représentant une variante non comprise dans l'invention, la cavité 9 et le logement 8 sont confondus.

D'une manière générale les orifices 12,13 débouchent dans la cavité 9 dont la taille dépend des applications.

## Revendications

1. Amortisseur de vibrations pour une pédale d'embrayage appartenant à une commande hydraulique d'embrayage comprenant un émetteur (3), actionné par la pédale de débrayage et relié par une conduite (4), à un récepteur (5) agissant sur une butée de débrayage (36) d'un embrayage de véhicule automobile, du type comportant un corps (7) muni d'une cavité (9) destinée à être raccordée à la commande hydraulique comprenant un fluide d'actionnement, un bloc en matière élastique (22) monté dans un logement (8) du corps (7) et la cavité (9), formant chambre dudit fluide, étant délimitée par le bloc en matière élastique (22) fermant de manière étanche la cavité (9) et prenant appui sur une butée (24) solidaire dudit corps (7), **caractérisé en ce que** le logement (8) est muni d'un épaulement sur lequel s'appui un premier disque (23) percé, interposé entre la cavité (9) et le bloc en matière élastique (22).

2. Amortisseur selon la revendication 1, **caractérisé en ce que** le bloc en matière élastique est monté sous précontrainte entre la butée (24) et le premier disque (23).

3. Amortisseur selon la revendication 2, **caractérisé en ce que** la butée consiste en un second disque (24) percé.

4. Amortisseur selon la revendication 3, **caractérisé en ce que** le bloc comporte au moins une creusure (126,226).

5. Amortisseur selon la revendication 4, **caractérisé en ce que** la butée (24) présente au moins un trou (124) pour communiquer avec ladite creusure.

6. Amortisseur selon la revendication 1, **caractérisé en ce que** le bloc est en forme de chapeau.

7. Amortisseur selon la revendication 6, **caractérisé en ce que** le chapeau (22) présente un bord (27) présentant un bourrelet (128) pénétrant dans une gorge (128) ménagée dans le corps (8).

8. Amortisseur selon la revendication 1, **caractérisé en ce que** la cavité est dotée d'une chicane (16,160) pour diriger le fluide de commande vers le bloc en matière élastique (22).

## Claims

1. Vibration damper for a clutch pedal forming part of a hydraulic clutch control comprising a transmitter (3), actuated by the clutch pedal and connected by a pipe (4) to a receiver (5) acting on a clutch release bearing (36) of a motor vehicle clutch, of the type comprising a body (7) provided with a cavity (9) intended to be connected to the hydraulic control comprising an actuating fluid, a block of elastic material (22) mounted in a housing (8) in the body (7) and the cavity (9), forming a chamber for the said fluid, being delimited by the block of elastic material (22) sealingly closing off the cavity (9) and bearing on a stop (24) fixed to the said body (7), **characterised in that** the housing (8) is provided with a shoulder on which there bears a first perforated disc (23), interposed between the cavity (9) and the block of elastic material (22).

2. Damper according to Claim 1, **characterised in that** the block of elastic material is mounted under prestressing between the stop (24) and the first disc (23).

3. Damper according to Claim 2, **characterised in that** the stop consists of a second perforated disc (24).

4. Damper according to Claim 3, **characterised in that** the block comprises at least one hollow (126, 226).

5. Damper according to Claim 4, **characterised in that** the stop (24) has at least one hole (124) for communicating with the said hollow.

6. Damper according to Claim 1, **characterised in that** the block is in the form of a cap.

7. Damper according to Claim 6, **characterised in that** the cap (22) has an edge (27) with a rim (128) entering a groove (128) provided in the body (8).

8. Damper according to Claim 1, **characterised in that** the cavity is provided with a baffle (16, 160) for directing the control fluid to the block of elastic material (22).

## Patentansprüche

1. Schwingungsdämpfer eines Kupplungspedals, das zu einer hydraulischen Kupplungsbetätigung gehört, die einen Geberzylinder (3) umfasst, der durch das Kupplungspedal betätigt wird und durch eine Leitung (4) mit einem Nehmerzylinder (5) verbunden ist, der auf ein Ausrücklager (36) einer Kraftfahrzeugkupplung einwirkt, umfassend einen Körper (7), der mit e inem Hohlraum (9) versehen ist, d er d azu bestimmt ist, mit der hydraulischen Kupplungsbetätigung verbunden zu werden und eine Betätigungsflüssigkeit enthält, einen Block aus elastischem Material (22), der in einer Aufnahme (8) des Körpers (7) gelagert ist, und den Hohlraum (9), der als Kammer der besagten Flüssigkeit dient und durch den Block aus elastischem Material (22) begrenzt w ird, d er d en H ohlraum (9) d icht v erschließt u nd auf einem fest mit dem besagten Körper (7) verbundenen Anschlag (24) zur Auflage kommt, **dadurch gekennzeichnet, dass** die Aufnahme (8) mit einer Schulter versehen ist, auf der eine gelochte ersten Scheibe (23) aufliegt, die zwischen dem Hohlraum (9) und dem Block aus elastischem Material (22) eingefügt ist.

2. Dämpfer nach Anspruch 1, **dadurch gekennzeichnet, dass** der Block aus elastischem Material unter Vorspannung zwischen dem Anschlag (24) und der ersten Scheibe (23) eingebaut ist.

3. Dämpfer nach Anspruch 2, **dadurch gekennzeichnet, dass** der Anschlag aus einer gelochten zweiten Scheibe (24) besteht.

4. Dämpfer nach Anspruch 3, **dadurch gekennzeichnet, dass** der Block mindestens eine Einsenkung (126, 226) umfasst.

5. Dämpfer nach Anspruch 4, **dadurch gekennzeichnet, dass** der Anschlag (24) mindestens ein Loch (124) aufweist, um eine Verbindung mit der besagten Einsenkung herzustellen.

6. Dämpfer nach Anspruch 1, **dadurch gekennzeichnet, dass** der Block hutförmig ausgeführt ist.

7. Dämpfer nach Anspruch 6, **dadurch gekennzeichnet, dass** der Hut (22) einen Rand (27) umfasst, der einen Wulst (128) aufweist, der in eine in den Körper (8) eingearbeitete Auskehlung (128) eindringt.

8. Dämpfer nach Anspruch 1, **dadurch gekennzeichnet, dass** der Hohlraum mit einem Ablenkelement (16, 160) versehen ist, um die Betätigungsflüssigkeit zum Block aus elastischem Material (22) zu lenken.
